# EUROPEAN PATENT SPECIFICATION

(11) **EP 3 738 866 B1**
(45) Date of publication and mention of the grant of the patent: **12.02.2025**
(21) Application number: 20173098.3
(22) Date of filing: 06.05.2020
(51) Int. Cl.: B62D 33/02

(54) **TIMBER BUNK AND METHOD IN CONNECTION WITH TIMBER BUNK**
HOLZBETT UND VERFAHREN IN VERBINDUNG MIT EINEM HOLZBETT
LIT SUPERPOSÉ EN BOIS ET PROCÉDÉ EN RELATION AVEC LE LIT SUPERPOSÉ EN BOIS

(30) Priority: 08.05.2019 FI 20195377
(43) Date of publication of application: 18.11.2020
(73) Proprietor: Alucar Oy, 66640 Maksamaa (FI)
(72) Inventor: Finne, Leif, 66640 Maksamaa (FI)
(74) Representative: Kolster Oy Ab

(56) References cited:
- DE-A1- 2 944 102
- FI-A- 793 484
- FI-B- 74 910

## Description

### Background of the invention

The invention relates to a timber bunk comprising a horizontal beam both ends of which have a pocket where a substantially vertical post is arranged to be connected. The pocket has an inner end surface and an outer end surface in the longitudinal direction of the horizontal beam. The invention additionally relates to a method in connection with a timber bunk.

Document DE 2944102 discloses a long timber carrier that comprises upper and lower horizontal tubes and vertical supports at both ends of the tubes. The vertical supports are assembled through fasteners that are located in the ends of the upper and lower tubes. The long timber carrier is designed so that it can accommodate an elongated tightening device. The tightening device is inserted through an opening between the fasteners of the upper and lower tubes.

### Brief description of the invention

It is an object of the invention to present a new type of solution for timber bunks. The object of the invention is achieved by a timber bunk and method which are characterised by what is stated in the independent claims. Preferred embodiments of the invention are disclosed in the dependent claims.

The invention is based on the bunk having a load-receiving member which allows an opening to be made in the pockets of the bunk. The benefit of the inventive timber bunk is that a load tightener may be placed inside the horizontal beam of the timber bunk, and that it may be removed from there for servicing and repairing purposes. The load-receiving member makes sure the strength of the bunk is maintained despite the opening.

In the following, a timber bunk is explained it its operating position.

The timber bunk comprises a hollow horizontal beam and two substantially vertical posts that are located at opposite sides of the horizontal beam. The horizontal beam and posts are usually of steel or aluminium. The timber bunk is usually secured to its base by two fasteners. A bunk structure may be installed either fixedly or movably to a body of a truck or trailer.

At both ends of the horizontal beam there are pockets fixedly connected to the horizontal beam and fixed to the horizontal beam by welding, for example. The pockets are hollow on the inside and have an inner end surface and outer end surface in the longitudinal direction of the horizontal beam. In a use situation, the inner end surface is outside the pocket, on the load side, and the outer end surface is outside the pocket, outside the load. The posts are fixed to the pockets by bolting, in other words, the fastening of the posts is detachable. The pockets and the post are so designed that when the bolts are being tightened the joint surfaces guide the posts into the correct angle in relation to the horizontal beam.

The outer end surface of the pocket comprises an opening for installing a load tightener. The opening is advantageously at a lower part of the pocket so that it has a straight horizontal connection inside the horizontal beam. The opening may be bevelled at the lower part of the pocket, on the inner end surface side, obliquely up onto the outer end surface side of the pocket.

Inside the pocket, on its inner end surface side, there is a load-receiving member. The load-receiving member compensates for the weakening that the opening causes so that there will not be a weak spot in the bunk because of the opening. The load-receiving member is a load detent placed on the mouth of the opening. The inner walls of the bunk may be so shaped that a space is formed inside the bunk, which corresponds to the shape of the load detent and is therefore compatible with the load detent.

Access inside the horizontal beam is achieved by first removing a post and then removing the load-receiving member. A load tightener may then be installed inside or removed from inside the horizontal beam.

In a use situation, a load tightener is connected to chains installed over a timber load. A hook of the load tightener is fixed to the chain, and the chain is tightened with the load tightener. The load tightener is usually connected to the pneumatic or hydraulic system of a vehicle and consequently receives its driving force therefrom.

### Brief description of the drawings

The invention will now be described in closer detail in connection with the preferred embodiments, with reference to the accompanying drawings in which:
Figure 1 is a front view of a timber bunk;
Figure 2 is a perspective view of a timber bunk;
Figure 3 is a cross-section of part of a timber bunk;
Figure 4 is a perspective view of a load detent;
Figure 5 shows a perspective view of a detail of a timber bunk with the opening closed;
Figure 6 shows a detail of a timber bunk with the opening opened;
Figure 7 shows a detail of a timber bunk when the load detent removed through the opening.

### Detailed description of the invention

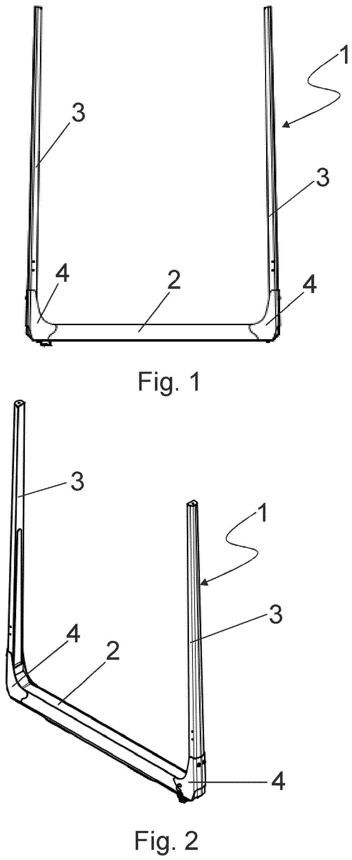

Figures 1 to 7 show the same embodiment of the invention.

Figures 1 and 2 show a timber bunk 1 which comprises a horizontal beam 2 hollow on the inside, two substantially vertical posts 3, and, at both ends of the horizontal beam 2, pockets 4 fixed thereto. The longitudinal direction of the horizontal beam 2 is the lateral direction of the vehicle. The timber bunk 1 is usually secured to its base by two fasteners.

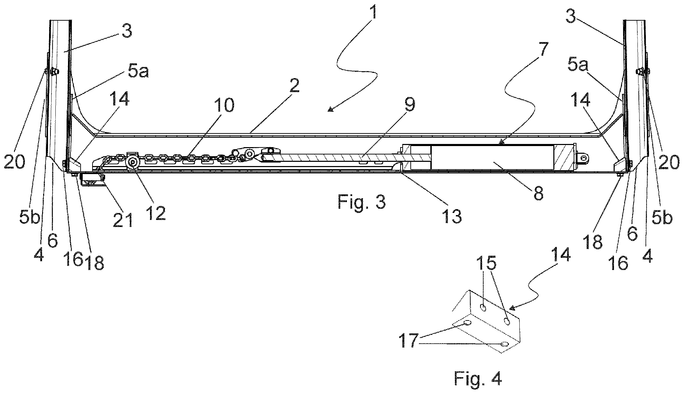

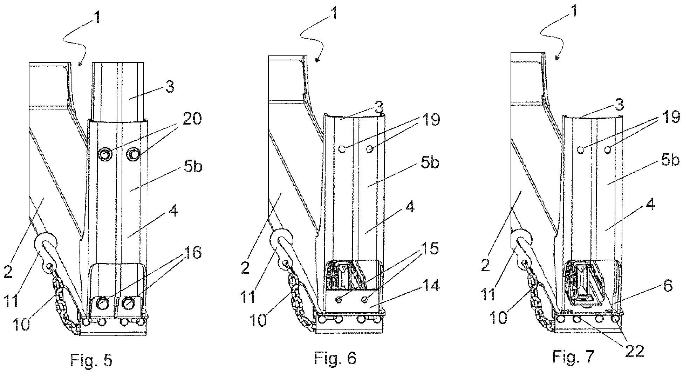

Figure 3 shows a cross-sectional view of part of the timber bunk 1, the posts 3 being shown as cut. A load tightener 7 is installed inside the horizontal beam 2. The load tightener 7 may comprise a pneumatic or hydraulic cylinder 8 whose arm 9 is connected on the outside of the timber bunk 1 with a chain 10. At the end of the chain 10 there is usually a hook 11 (Figure 5). The chain 10 is controlled with guide rolls 12 or similar. The cylinder 8 is kept in place by a retainer 13. The cylinder 8 is usually arranged to be controlled by the pneumatic or hydraulic system of a vehicle. The load tightener 7 may also be implemented in a different way than that described in the above.

The pockets 4 are hollow on the inside and have an inner end surface 5a and outer end surface 5b in the longitudinal direction of the horizontal beam 2. In a use situation, the inner end surface 5a is outside the pocket 4, on the load side, and outer end surface 5b is outside the pocket, outside the load. The posts 3 are fixed to the pockets 4 by bolts, in other words the fastening of the posts 3 is detachable. The pockets 4 and the post 3 are so designed that when the bolts are being tightened the joint surfaces guide the posts 3 into the correct angle in relation to the horizontal beam 2.

The outer end surface 5b of the pocket 4 comprises an opening 6 for the installation of a load tightener 7. The opening 6 is advantageously at the lower part of the pocket 4 so that it has a straight horizontal connection inside the horizontal beam 2. The opening 6 may be bevelled at the lower part of the pocket 4, on the inner end surface 5a side, obliquely up onto the outer end surface 5b side of the pocket 4. Figure 3 only shows part of the opening 6 because the posts 3 cover the opening 6.

Inside the pocket 4, on the side of is inner end surface 5a, there is a load-receiving member which may be a load detent 14. The load detent 14 is placed on the mouth of the opening 6 and receives the stress that the load causes. The inner walls of the bunk 1 may be so shaped at the pocket 4 and/or the horizontal beam 2 so that inside the bunk 1 a space is formed which is compatible with the load detent 14.

Both pockets 4 of the bunk 1 may have the opening 6 of the type referred to in the above, or just one pocket 4 of the bunk 1 may include the opening 6.

Figure 4 shows a perspective view of a possible load detent 14. The load detent 14 has the shape of a cut wedge. The load detent 14 has holes 15 for bolts 16, and holes 17 for bolts 18.

Figure 5 shows a perspective view of a detail of a timber bunk 1 with the opening 6 closed. The post 3 is attached through holes 19 with bolts 20, and through holes 15 with bolts 16. The chain 10 and its hook 11 extend outside the horizontal beam 2 through an opening 21 (Figure 3) at the bottom of the horizontal beam 2.

Figure 6 shows a detail of the timber bunk when the opening 6 is open, but the load detent 14 is in place. Figure 7, in turn, shows a detail of the timber bunk 1 when the load detent 14 has been removed through an opened the opening 6. Figure 7 shows the holes 22 through which the bolts 18 are fastened to the load detent 14.

When the load tightener 7 is placed inside the horizontal beam 2 or removed from there, the post 3 is removed from the rest of the bunk 1 by removing the bolts 16 and 20. When the post 3 has been removed, the bolts 18 are opened whereby the load detent 14 comes out. After this, the load tightener 7 may be installed inside the horizontal beam 2 or removed from there.

Those skilled in the art will find it obvious that, as technology advances, the basic idea of the invention may be implemented in many different ways. The invention and its embodiments are thus not restricted to the above-described examples but may vary as long they fall under the scope of the claims.

## Claims

1. A timber bunk (1) comprising a horizontal beam (2) having a bottom and both ends of the horizontal beam (2) have a pocket (4) where a substantially vertical post (3) is connected, the pocket (4) having an inner end surface (5a) and an outer end surface (5b) in the longitudinal direction of the horizontal beam (2), **characterized in that** inside the pocket (4), on the side of its inner end surface (5a), a load detent (14) is detachably attached to the bottom of the horizontal beam (2) by bolt joints and the substantially vertical post (3) is attached to the load detent (14) and to the outer end surface (5b) of the pocket (4) by bolt joints, and the outer end surface (5b) of the pocket (4) comprises an opening (6) extending to the level of a lower edge of the horizontal beam (2) for installing a load tightener (7).

2. A timber bunk as claimed in claim 1, **characterized in that** the opening (6) is formed by bevelling at the lower part of the pocket (4), on the inner end surface (5a) side, obliquely up onto the outer end surface (5b) side of the pocket (4).

3. A method in connection with a timber bunk (1), the timber bunk (1) comprising a horizontal beam (2) having a bottom and both ends of the horizontal beam (2) have a pocket (4) where a substantially vertical post (3) is connected, said pocket (4) having, in the longitudinal direction of the horizontal beam (2), an inner end surface (5a) and an outer end surface (5b), **characterized in that** the outer end surface (5b) comprises an opening (6) extending to the level of a lower edge of the horizontal beam (2), wherein inside the pocket (4), on the side of its inner end surface (5a), a load detent (14) is detachably attached to the bottom of the horizontal beam (2) by bolt joints and the substantially vertical post (3) is attached to the load detent (14) and to the outer end surface (5b) of the pocket (4) by bolt joints, and the method being intended for removing a load tightener (7) from inside the horizontal beam (2) of the timber bunk (1), the method comprising
- removing the substantially vertical post (3) by removing bolts (16, 20),
- detaching the load detent (14) from the bottom of the horizontal beam (2) by removing bolts (18), and
- taking out the load detent (14).

## Patentansprüche

1. Holzbett (1), das einen horizontalen Träger (2) umfasst, der einen Boden aufweist, wobei beide Enden des horizontalen Trägers (2) eine Tasche (4) aufweisen, wo ein im Wesentlichen vertikaler Pfosten (3) verbunden ist, wobei die Tasche (4) in der Längsrichtung des horizontalen Trägers (2) eine innere Endfläche (5a) und eine äußere Endfläche (5b) aufweist, **dadurch gekennzeichnet, dass** in der Tasche (4) auf der Seite ihrer inneren Endfläche (5a) ein Lastfeststeller (14) mit Schraubenverbindungen am Boden des horizontalen Trägers (2) lösbar befestigt ist und der im Wesentlichen vertikale Pfosten (3) durch Schraubenverbindungen am Lastfeststeller (14) und an der äußeren Endfläche (5b) der Tasche (4) befestigt ist und die äußere Endfläche (5b) der Tasche (4) eine Öffnung (6) umfasst, die sich zum Installieren eines Lastspanners (7) zur Ebene einer Unterkante des horizontalen Trägers (2) erstreckt.

2. Holzbett nach Anspruch 1, **dadurch gekennzeichnet, dass** die Öffnung (6) durch Abschrägen im unteren Teil der Tasche (4) auf der Seite der inneren Endfläche (5a), schräg nach oben zur Seite der äußeren Endfläche (5b) der Tasche (4) gebildet wird.

3. Verfahren in Verbindung mit einem Holzbett (1), wobei das Holzbett (1) einen horizontalen Träger (2) umfasst, der einen Boden aufweist, wobei beide Enden des horizontalen Trägers (2) eine Tasche (4) aufweisen, wo ein im Wesentlichen vertikaler Pfosten (3) verbunden ist, wobei die Tasche (4) in der Längsrichtung des horizontalen Trägers (2) eine innere Endfläche (5a) und eine äußere Endfläche (5b) aufweist, **dadurch gekennzeichnet, dass** die äußere Endfläche (5b) eine Öffnung (6) umfasst, die sich zur Ebene einer Unterkante des horizontalen Trägers (2) erstreckt, wobei in der Tasche (4) auf der Seite ihrer inneren Endfläche (5a) ein Lastfeststeller (14) mit Schraubenverbindungen lösbar am Boden des horizontalen Trägers (2) befestigt ist und der im Wesentlichen vertikale Pfosten (3) mit Schraubenverbindungen am Lastfeststeller (14) und an der äußeren Endfläche (5b) der Tasche (4) befestigt ist und wobei das Verfahren zum Entfernen eines Lastspanners (7) von der Innenseite des horizontalen Trägers (2) des Holzbetts (1) vorgesehen ist, wobei das Verfahren Folgendes umfasst
- Entfernen des im Wesentlichen vertikalen Pfostens (3) durch Entfernen von Schrauben (16, 20),
- Lösen des Lastfeststellers (14) vom Boden des horizontalen Trägers (2) durch Entfernen von Schrauben (18), und
- Herausnehmen des Lastfeststellers (14).

## Revendications

1. Lit superposé en bois (1) comprenant une poutre horizontale (2) ayant un fond et deux extrémités de la poutre horizontale (2) ont une poche (4) où un montant sensiblement vertical (3) est raccordé, la poche (4) ayant une surface d'extrémité interne (5a) et une surface d'extrémité externe (5b) dans la direction longitudinale de la poutre horizontale (2), **caractérisé en ce qu'**à l'intérieur de la poche (4), du côté de sa surface d'extrémité interne (5a), un encliquetage de charge (14) est fixé, de manière détachable, au fond de la poutre horizontale (2) par des articulations à boulon et le montant sensiblement vertical (3) est fixé à l'encliquetage de charge (14) et à la surface d'extrémité externe (5b) de la poche (4) par des articulations à boulon, et la surface d'extrémité externe (5b) de la poche (4) comprend une ouverture (6) s'étendant vers le niveau d'un bord inférieur de la poutre horizontale (2) pour installer un dispositif de tension de charge (7).

2. Lit superposé en bois selon la revendication 1, **caractérisé en ce que** l'ouverture (6) est formée par chanfreinage au niveau de la partie inférieure de la poche (4), du côté de la surface d'extrémité interne (5a), de manière oblique jusque du côté de la surface d'extrémité externe (5b) de la poche (4).

3. Procédé en relation avec un lit superposé (1), le lit superposé (1) comprenant une poutre horizontale (2) ayant un fond et deux extrémités de la poutre horizontale (2) ont une poche (4) où un montant sensiblement vertical (3) est raccordé, ladite poche (4) ayant, dans la direction longitudinale de la poutre horizontale (2), une surface d'extrémité interne (5a) et une surface d'extrémité externe (5b), **caractérisé en ce que** la surface d'extrémité externe (5b) comprend une ouverture (6) s'étendant vers le niveau d'un bord inférieur de la poutre horizontale (2), dans lequel à l'intérieur de la poche (4), du côté de sa surface d'extrémité interne (5a), un encliquetage de charge (14) est fixé, de manière détachable, au fond de la poutre horizontale (2) par des articulations à boulon et le montant sensiblement vertical (3) est fixé à l'encliquetage de charge (14) et à la surface d'extrémité externe (5b) de la poche (4) par des articulations à boulon, et le procédé est prévu pour retirer un dispositif de tension de charge (7) de l'intérieur de la poutre horizontale (2) du lit superposé (1), le procédé comprenant les étapes consistant à :
retirer le montant sensiblement vertical (3) en retirant les boulons (16, 20),
détacher l'encliquetage de charge (14) du fond de la poutre horizontale (2) en retirant les boulons (18), et
enlever l'encliquetage de charge (14).
